# EUROPEAN PATENT SPECIFICATION

(11) **EP 2 035 277 B1**
(45) Date of publication and mention of the grant of the patent: **22.09.2010**
(21) Application number: 07765012.5
(22) Date of filing: 03.07.2007
(51) Int. Cl.: B64C 27/26, B64C 27/30

(54) **AIRCRAFT WITH A CONVERTIBLE FLIGHT SYSTEM**
FLUGZEUG MIT KONVERTIERBAREM FLUGSYSTEM
AERONEF AYANT UN SYSTEME DE VOL CONVERTIBLE

(30) Priority: 03.07.2006 ES 200601791
(43) Date of publication of application: 18.03.2009
(73) Proprietor: Institutio Nacional de Tecnica Aeroespacial " Esteban Terradas", 28850 Torrejon de Ardoz (Madrid) (ES)
(72) Inventor: MULERO VALENZUELA, Manuel, 28850 Torrejon de Ardoz (ES)
(74) Representative: Carvajal y Urquijo, Isabel
(86) International application number: PCT/EP2007/005863
(87) International publication number: WO 2008/003455

(56) References cited:
- FR-A- 816 813
- FR-A1- 2 736 889
- US-A- 1 622 191
- US-A- 2 679 364
- US-B1- 6 622 962
- US-B1- 6 669 137

## Description

### Field of the Invention

The present invention relates to an aircraft with a convertible flight system, and more specifically to an aircraft that can indistinctly function as a helicopter or as an airplane, and comprising a fuselage, retractable wings, tail stabilizers, a main vertical shaft rotor and other propulsion means.

The aircraft of the invention thus combines the flight features of a helicopter and those of a conventional airplane, thus allowing vertical take-off and landing and stationary or hovering flight operations of a helicopter, and the high performance cruising flight operations of an airplane, with very safe and smooth transitional phases from one flight mode to another.

### Background of the Invention

Aircraft of the type set forth which can function as a helicopter or as an airplane are already known, for example from US 2679364, which constitutes the closest prior art.

US patent 3,792,827 can be pointed out in this sense, which describes an aircraft comprising a vertical shaft rotor, which can be used as a rotating rotor, in which case the aircraft functions as a helicopter, or in a fixed position, with two of the rotor blades functioning as wings for flight as a traditional airplane. This system requires the rotor blades to be considerably large, such that two of its blades can function as wings in airplane flight mode.

PCT patent document WO 2005/086563 describes a convertible aircraft, comprising a main vertical shaft rotor, whereby said craft can fly like a helicopter, and two fixed wings, allowing airplane flight mode, the rotor in this mode being immobilized and the blades thereof being directed backwards when the aircraft operates in airplane mode. In this embodiment the aircraft has fixed wings, which are a drawback during operation of the aircraft in helicopter mode.

Some composite helicopters have been developed which are formed by a fixed wing to discharge the rotor in cruising flight and allow increasing its speed, providing them with a propulsion in addition to the propulsion supplied by the rotor itself or not, but in these cases the wing is a drawback for vertical take-off or landing and for the hovering flight due to the vertical drag caused by being subjected to the wind blast of the rotor.

### Description of the Invention

The present invention has the object of eliminating the problems set forth by means of an aircraft that can function in helicopter mode or in airplane mode and which, in each of these operating modes virtually has only the elements characteristic of such operating mode. Therefore the elements which, being necessary for one of the flight modes, may represent a drawback for the other flight mode if they are permanently exposed, are functionally eliminated.

In other words, in the case of helicopter flight, the craft will be in a configuration which lacks wings exposed to the airflow, whereas in the airplane flight mode the lifting rotor of the helicopter is inactive and in a minimum drag position.

The aircraft of the invention, as defined by the features of claim 1, is **characterized in that** it has, in the lower part of the fuselage or on both sides thereof, respective moving semi-wings, which can oscillate in an approximately horizontal plane between a retracted position, in which they are placed against or concealed in the fuselage, and an extracted position, in which they project from said fuselage, to function as lifting wings in airplane mode.

To achieve this arrangement, the wings will be assembled in a hinged manner to the fuselage and will be actuated to go from one position to the other by means of mechanisms based on hydraulic, mechanical or electrical systems, the choice of which will be conditioned by operation safety and weight criteria of the associated mechanisms which can be different according to the size of the specific aircraft or according to whether or not is has a human pilot on board.

The wings will further occupy the retracted position when the propulsion means function in helicopter mode, whereas when the aircraft reaches a certain speed in flight, which will be referred to as the "transition speed", the wings are deployed to the extracted position and the propulsion means function in airplane mode, and vice versa.

In other words, when the wings occupy a certain position, the propulsion means will function according to the type of flight of the aircraft. In the same way that the wings go form one position to another automatically when exceeding or reducing the "transition speed", the propulsion means will change their way of functioning also automatically. The propulsion means will increase their function progressively in one of the flight modes while at the same time reducing their functioning in the other flight mode.

The so-called "transition flight speed" will be a speed that is close to flight speed, maximizing the lift/drag in the configuration of helicopter.

As indicated, the aircraft will consist of a fuselage and a main rotor and also an anti-torque tail rotor, for it to function as a helicopter, when the propulsion means consist, for example, of a reciprocating engine or turbine which is housed in the fuselage. The aircraft can also be propelled by a gas turbine which ejects the gases at the blade tip, in which case it will not need the anti-torque rotor.

The aircraft can have a tractor or pusher propeller to which the power of the changes of propulsion (reciprocating engine or gas turbine) when the "transition speed" is reached, while at the same time power is taken away from the main rotor and the tail rotor.

When going from helicopter flight mode to airplane flight mode, the main rotor can be left in autorotation or can be stopped and locked, and even hidden by means of a fairing, to reduce aircraft drag. This process will be carried out in the reverse way to go from airplane flight mode to helicopter flight mode.

As indicated, in the version that is propelled by a gas turbine which ejects the gases at the blade tip, the tail rotor can be dispensed with if the main rotor is actuated, ejecting the gases from the turbine at the blade tip such that they make it rotate. The transition from one flight mode to another will be carried out in this case by gradually ejecting the gases through a thrust nozzle, taking them away from those that are ejected at the blade tip. The arrangement and process of deploying and withdrawing the wings will be carried out in the way already described.

The aircraft of the invention will therefore have submersible wings in the lower part of the fuselage or wings that can be placed against its sides and will have a process of deploying these wings, combined with the variation of power applied to the rotor or propeller (or thrust nozzle in the gas turbine version).

The invention allows carrying out in a compact and efficient manner the flight of an aircraft as a helicopter and as an airplane and when the wings are retracted in the fuselage, the helicopter flight mode eliminates the negative effect of the wind blast of the rotor on the wings and the drag they would have if they were wings in a fixed position. The transitional phases from one flight mode to another are furthermore very safe compared to other known systems given that in this case there is always an active lifting element (the rotor or wings). This further confers the aircraft of the invention with intrinsic safety in the event the engine fails, because it can descend smoothly in autorotation, gliding with the wings or with a combination of both.

The technical problem solved by the invention consists of enabling flight operations as a conventional helicopter, with all its flight qualities, as well as a highly efficient cruising flight of a conventional airplane.

The applications of the invention can be military and civil applications requiring vertical take-off and landing and hovering flight capacity. For example, it can be used for surveillance and rescue missions, "point to point" passenger carriage or for carrying cargo of any type, requiring no prepared fields or runways, all this combining the cruising flight capacity at speeds and with an efficiency that exceeds a conventional helicopter.

### Brief Description of the Drawings

For the purpose of better understanding the features and advantages of the aircraft of the invention, a more detailed description thereof is provided below with the aid of the attached drawings which show a non-limiting embodiment.

In the drawings:
Figure 1 shows a side elevational view of an aircraft formed according to the invention, adapted for its helicopter flight mode.
Figure 2 is an upper plan view of the aircraft of Figure 1.
Figure 3 is a front elevational view of the aircraft of Figures 1 and 2.
Figure 4 is a view similar to Figure 1, with the aircraft adapted for its airplane flight mode.
Figure 5 is an upper plan view of the aircraft of Figure 3.
Figure 6 is a front elevational view of the aircraft of Figures 4 and 5.
Figure 7 is a plan view similar to Figures 2 and 5, showing an intermediate phase of withdrawing or deploying the wings to go from one flight mode to another.

### Detailed Description of an Embodiment

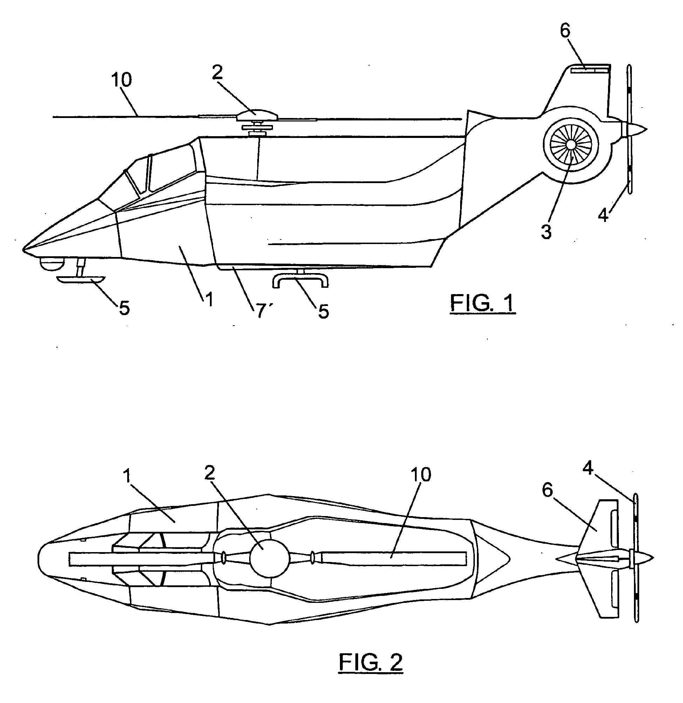

Figures 1, 2 and 3 show an aircraft, configured in helicopter mode, comprising a fuselage 1, a main vertical shaft rotor 2, an anti-torque tail rotor 3 and power (propulsion) generation means not shown, which are housed in the fuselage and which can consist of a reciprocating-type engine or a gas turbine. The aircraft further has a tractor or pusher propeller 4, the actuation of which is carried out through the same power generation means, not shown. The aircraft can further be provided with skids 5 and tail stabilizers 6, in a classic and horizontal configuration or in "V" configuration.

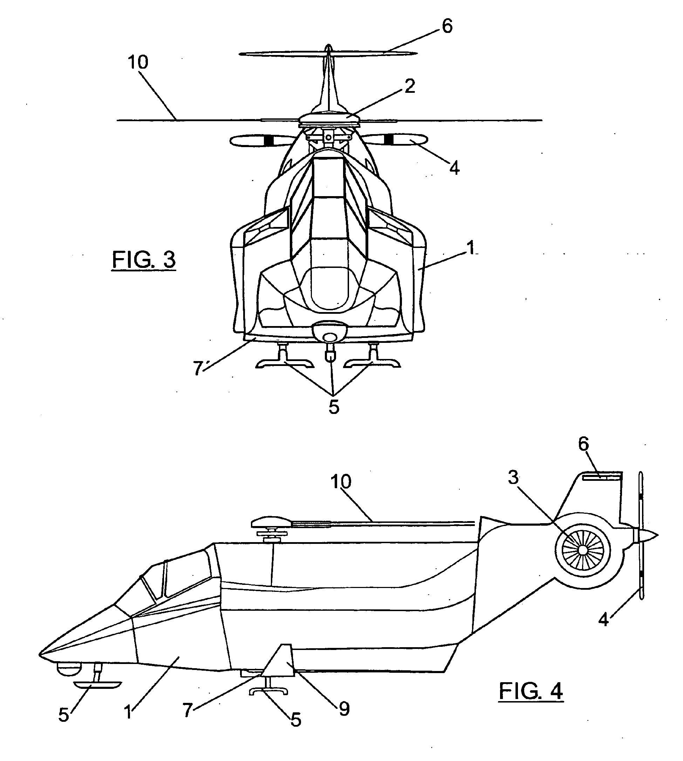

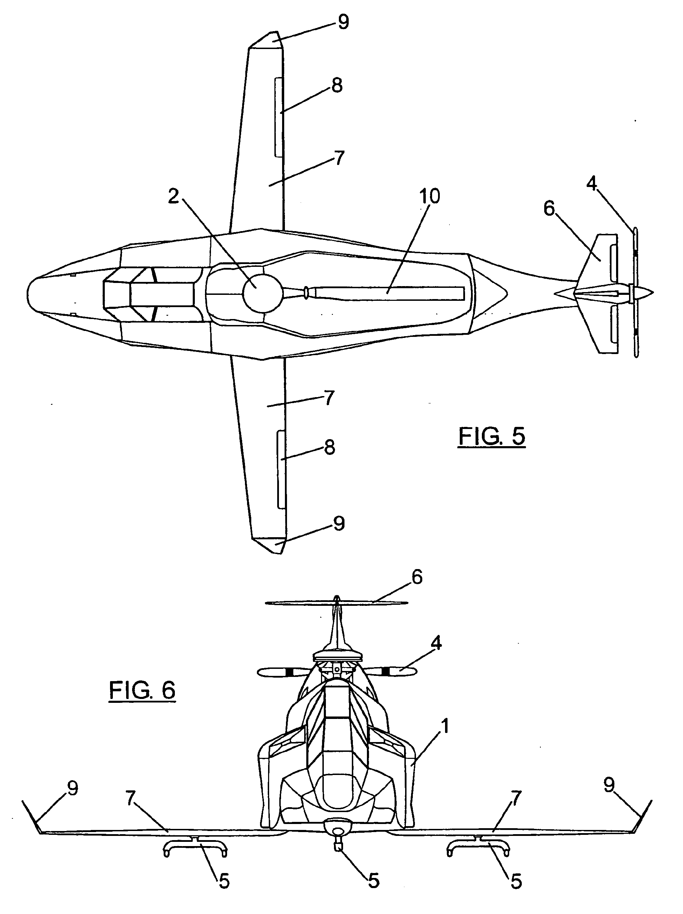

According to the invention the aircraft further has, under the fuselage 1 or on either side thereof, respective moving semi-wings 7, which can oscillate in a substantially horizontal plane between a retracted position, shown in Figures 1 and 3, in which they have reference number 7' and in which they are placed against or concealed in the fuselage 1, and an extracted position, shown in Figures 4 to 6, in which they have reference number 7, in which they project from said fuselage to function as lifting wings in airplane flight mode. These wings 7 will be assembled in a hinged manner and the actuation thereof to go from the withdrawn position to the deployed position and vice versa can be mechanical, for example formed by a set of gears, with hydraulic or electrical actuation and electronic control. The wings 7 will have longitudinal ailerons 8, Figure 5, and end winglets 9.

In the position of Figures 1 to 3, the aircraft functions as a helicopter, with the main lifting and propulsion rotor 2 and the anti-torque tail rotor 3. The wings 7 are in the concealed position 7' in the fuselage 1, such that they present no problem whatsoever for operating the aircraft in helicopter mode.

When the aircraft in helicopter flight mode, with the arrangement of Figures 1 to 3, reaches a certain flight speed, which will be referred to as "transition speed" and which is close to the flight speed, maximizing the lift/drag in, the wings, which are withdrawn in position 7', begin to deploy until reaching the position of Figures 4 to 6, in which they are completely deployed for their flight as an airplane. In this position, the blades 10 of the rotor 2 can be withdrawn, being longitudinally directed backwards, and are optionally covered by their fairing such that they are no obstacle whatsoever for flight as an airplane. At the same time this transition occurs, power is transmitted to the tractor or pusher propeller 4, equally taking power away from the main rotor 2 and from the tail rotor 3.

The described process is carried out in reverse to go from airplane flight mode to helicopter flight mode.

If the aircraft is propelled by gas turbine, the tail rotor 3 could be dispensed with, in the event that the main rotor 2 is actuated by ejecting the gases from the turbine at the blade tip 10, such that they make it rotate. The transition from one flight mode to another will be carried out in this case by gradually ejecting the gases through a thrust nozzle, not shown, taking them away from those that are ejected at the blade tip 10.

The pusher propeller 4 can incorporate a pitch variation mechanism, such that the engine rotates at constant turns and the required traction or pushing is achieved by varying the pitch of the blades of this propeller. The end winglets 9 of the wings 7 cause the effect of increasing the effective elongation, thus achiever greater efficiency in airplane flight mode.

Even though in the example shown in the drawing the wings 7 are folded backwards to place them in the retracted position, they could equally be withdrawn forwards.

In the same way the features of the invention can be applied both to a manned or unmanned aircraft.

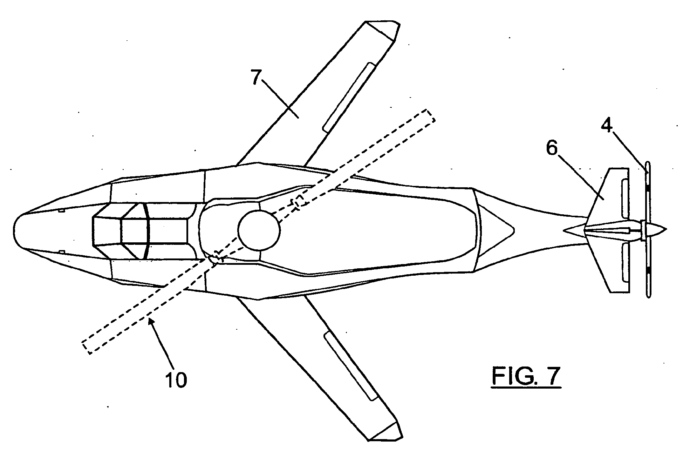

With the described constitution, and based on a helicopter configuration, Figures 1 to 3, the craft can take off vertically thanks to the traction provided by the main rotor 2, being lifted up to the desired altitude. In this situation, the wings 7 will be located in the withdrawn or retracted position 7', being concealed under the fuselage 1 or along the sides thereof. The pusher propeller 4 will be stopped. Then, and thanks to the cyclic pitch variation mechanisms of the main rotor, the latter will provide the necessary thrust so that the aircraft can acquire a certain horizontal speed, until reaching the value that has been referred to as the "transition speed", which is the speed at which the helicopter configuration starts to be inefficient (in terms of lift divided by drag and power required for horizontal flight according to the flight speed), at which time deployment of the wings 7 begins, as shown in Figure 7, until reaching complete deployment shown in Figures 4 and 6. The application of power to the propeller 4 and the reduction of power to the main rotor 2 are carried out during the deployment of the wings 7, which operation can be carried out in a question of seconds. In this process, the wings 7 gradually develop the lift required to maintain the aircraft in horizontal flight, being controlled in this flight mode through the control surfaces of the wing (ailerons 8) and of the tail surfaces 6, elevators and rudders or a combination of both. The main rotor 2 can be stopped and withdrawn, with the blades 10 directed backwards, as shown in Figures 4 and 5. A fairing can further be added for the withdrawn rotor, depending on the maximum speeds to be reached. The tail rotor 3 is stopped or disengaged since it is no longer necessary for airplane flight mode. The aircraft can maintain stationary flight in one point at any desired time by means of carrying out the process described above but in reverse, i.e. by reducing the forward speed to the "transition speed" or higher provided that no buffeting phenomenon occur in the rotor blades, applying power to the main rotor 2 and to the tail rotor 3 and taking it away from the power applied to the propeller 4, the latter being stopped and the wings 7 being withdrawn under the fuselage, or along the sides thereof, to position 7'.

This same operation is carried out for the landing, the aircraft remaining in helicopter mode, whereby enabling a vertical landing with all the maneuvering capacities of this type of aircraft.

In a version that is propelled by a gas turbine and which is used to move the main rotor 2 (in this case the only rotor since it is not necessary to compensate for any torque on the fuselage) by means of ejecting the gases at the blade tip 10, such that they make it rotate, the aircraft operation process consists of taking off as a helicopter thanks to the traction of the rotor which is moved by the action of the gases ejected at the blade tip. Upon acquiring the appropriate horizontal speed called the "transition speed", part of the gases are ejected at progressively higher flow rates through a conventional thrust nozzle, not shown, which function by causing a thrust and increasing the horizontal speed of the aircraft, the wings 7 then being deployed, which wings cause the necessary lift to maintain horizontal flight of the aircraft. This process continues until virtually all the gases of the turbine are deviated to the thrust nozzle, the rotor 2 being in autorotation, stopped or withdrawn, like in the case of propeller propulsion. The described process is carried out in reverse when going from airplane-type flight to helicopter-type flight for stationary flight or for a vertical landing.

## Claims

1. An aircraft having a convertible flight system so as to function as a helicopter in a helicopter flight mode and as an airplane in an airplane flight mode, the aircraft comprising:
1a) a fuselage (1);
1 b) a main vertical shaft rotor (2) configured to:
1b1) operate in the helicopter flight mode;
1b2) be disengaged in the airplane flight mode;
1c) propulsion means;
1d) moving wings (7, 7') configured to oscillate between a retracted position (7') and an
extracted position (7);
wherein the moving wings (7, 7'):
1e) are assembled in a hinged manner to the fuselage (1) in a location selected from a lower part of the fuselage (1) or on both sides thereof;
1f) are configured to oscillate in a substantially horizontal plane between:
1f1) the retracted position (7'), in which they are placed against or concealed along the fuselage (1) when the propulsion means function in helicopter flight mode, and a horizontal movement of the aircraft is less than a transition flight speed;
1f2) the extracted position (7), in which they project from the fuselage (1), to function as lifting wings when the propulsion means function in the airplane flight mode and the transition flight speed is reached.

2. The aircraft of claim 1, further comprising:
an anti-torque tail rotor (3) configured to:
operate in the helicopter flight mode;
be disengaged in the airplane flight mode.

3. The aircraft of any of claims 1-2, **characterized in that** the transition flight speed in the propulsion means is configured to be the flight speed maximizing a lift/drag ratio in the helicopter flight mode.

4. The aircraft of any of claims 1-3, **characterized in that** the propulsion means are configured to progressively increase their functioning in one of the flight modes, and to reduce their functioning in the other flight mode.

5. The aircraft of any of claims 1-4, **characterized in that** once the transition flight speed is reached and after the wings (7) reach the extracted position, the blades (10) of the main rotor (2) are subsequently placed in a longitudinal minimum drag position.

6. The aircraft of any of claims 1-5, **characterized in that** it comprises a pusher propeller (4) configured to be actuated by the propulsion means through a transmission which runs along the fuselage (1) upon reaching the transition flight speed during navigation.

7. The aircraft of any of claims 1-6, wherein the propulsion means consist of a gas turbine, **characterized in that** it comprises means for ejecting gases at the blade tip (10) of the rotor (2) and a thrust nozzle towards which the gases from said turbine progressively move upon reaching the transition flight speed during navigation.

## Patentansprüche

1. Luftfahrzeug, das ein wandelbares Flugsystem aufweist, um so als Hubschrauber in einer Hubschrauberflugbetriebsart und als Flugzeug in einer Flugzeugflügbetriebsart zu arbeiten, wobei das Luftfahrzeug umfasst:
1a) einen Rumpf (1);
1b) einen Hauptrotor (2) mit vertikaler Welle, der konfiguriert ist,
1b1) in der Hubschrauberflugbetriebsart in Betrieb zu sein;
1b2) in der Flugzeügflugbetriebsart außer Betrieb zu sein;
1c) Antriebsmittel;
1d) bewegliche Flügel (7, 7'), die konfiguriert sind, zwischen einer eingefahrenen Stellung (7') und einer ausgefahrenen Stellung (7) zu schwingen;
wobei die beweglichen Flügel (7, 7')
1e) in schwenkbarer Art und Weise am Rumpf (1) an einer Stelle angebracht sind, die an einem unteren Teil des Rumpfes (1) auf beiden Seiten desselben gewählt wurde;
1f) konfiguriert sind, in einer im Wesentlichen horizontalen Ebene zu schwingen zwischen
1f1) der eingefahrenen Stellung (7'), in der sie gegen den Rumpf (1) platziert oder entlang ihm versenkt sind, wenn das Antriebsmittel in Hubschrauberflugbetriebsart arbeitet und eine Horizontalbewegung des Luftfahrzeugs kleiner als eine Transitionsfluggeschwindigkeit ist;
1f2) der ausgefahrenen Stellung (7), in der sie vom Rumpf (1) hervorragen, um als Tragflügel zu arbeiten, wenn die Antriebsmittel in der Flugzeugflugbetriebsart arbeiten und die Transitionsfluggeschwindigkeit erreicht ist.

2. Luftfahrzeug nach Anspruch 1, das ferner umfasst:
einen Gegenmoment-Heckrotor (3), der konfiguriert ist,
in der Hubschrauberflugbetriebsart in Betrieb zu sein;
in der Flugzeugflugbetriebsart außer Betrieb zu sein.

3. Luftfahrzeug nach irgendeinem der Ansprüche 1-2, **dadurch gekennzeichnet, dass** die Transitionsfluggeschwindigkeit in den Antriebsmitteln konfiguriert ist, die Fluggeschwindigkeit zu sein, die eine Gleitzahl in der Hubschrauberflugbetriebsart maximiert.

4. Luftfahrzeug nach irgendeinem der Ansprüche 1-3, **dadurch gekennzeichnet, dass** die Antriebsmittel konfiguriert sind, ihre Tätigkeit in einer der Flugbetriebsarten progressiv zu steigern und ihre Tätigkeit in der anderen Flugbetriebsart zu verringern.

5. Luftfahrzeug nach irgendeinem der Ansprüche 1-4, **dadurch gekennzeichnet, dass,** sobald die Transitionsfluggeschwindigkeit erreicht ist und nachdem die Flügel (7) die ausgefahrene Stellung erreichen, die Blätter (10) des Hauptrotors (2) darauf folgend in einer Längsstellung mit minimalem Widerstand platziert werden.

6. Luftfahrzeug nach irgendeinem der Ansprüche 1-5, **dadurch gekennzeichnet, dass,** es eine Druckluftschraube (4) umfasst, die konfiguriert ist, beim Erreichen der Transitionsfluggeschwindigkeit während des Fluges von den Antriebsmitteln durch ein Getriebe betätigt zu werden, das den Rumpf (1) entlang verläuft..

7. Luftfahrzeug nach irgendeinem der'Ansprüche 1-6, wobei die Antriebsmittel aus einer Gasturbine bestehen, **dadurch gekennzeichnet, dass** sie Mittel zum Ausstoßen von Gasen an der Blattspitze (10) des Rotors (2) und eine Schubdüse umfassen, in deren Richtung die Gase aus der Turbine sich beim Erreichen der Transitionsfluggeschwindigkeit während des Fluges progressiv bewegen.

## Revendications

1. Un aéronef possédant un système de vol convertible lui permettant de fonctionner comme un hélicoptère en mode de vol hélicoptère et comme un avion en mode de vol avion, l'aéronef comprenant :
1a) un fuselage (1) ;
1 b) un rotor principal (2) configuré pour :
1 b) 1 opérer en mode de vol hélicoptère ;
1 b) 2 être débrayé en mode de vol avion ;
1c) des moyens de propulsion;
1d) des ailes mobiles (7, 7') configurées pour varier d'une position repliée (7') à une position déployée (7) ;
sur lequel les ailes mobiles (7, 7') :
1e) sont assemblées par un système articulé au fuselage (1) en un point choisi qui se trouvera soit sur la partie intérieure du fuselage (1), soit des deux côtés de ce dernier;
1f) sont configurées pour osciller sur un plan substantiellement horizontal entre :
1f 1) la position repliée (7'), dans laquelle elles sont placées contre ou dissimulées le long du fuselage (1) lorsque les moyens de propulsion fonctionnent en mode de vol hélicoptère et que le mouvement horizontal de l'aéronef est inférieur à la vitesse de transition ;
1f 2) la position dépliée (7), dans laquelle elles sortent du fuselage (1) pour fonctionner comme des ailes portantes lorsque les moyens de propulsion fonctionnent en mode de vol avion et que la vitesse de transition est atteinte.

2. L'aéronef de la revendication 1, comprenant :
un rotor anti-couple (3) configuré pour :
opérer en mode de vol hélicoptère ;
être débrayé en mode de vol avion.

3. L'aéronef de l'une quelconque des revendications 1-2 **caractérisé en que** la vitesse de transition dans les moyens de propulsion est configurée pour être la vitesse de vol maximisant la finesse en mode de vol hélicoptère.

4. L'aéronef de l'une quelconque des revendications 1-3 **caractérisé en que** les moyens de propulsion sont configurés pour accroître progressivement leur fonctionnement dans un des modes de vol et pour réduire leur fonctionnement dans l'autre mode de fonctionnement.

5. L'aéronef de l'une quelconque des revendications 1-4 **caractérisé en qu'**une fois que la vitesse de transition est atteinte et que les ailes (7) sont dans leur position déployée, les pales (10) du rotor principal (2) sont ensuite placées dans une position de traînée longitudinale minimale.

6. L'aéronef de l'une quelconque des revendications 1-5, **caractérisé en ce qu'**il comprend une hélice propulsive (4) configurée pour être actionnée par les moyens de propulsion à travers une transmission qui parcourt le fuselage (1) dès que la vitesse de transition est atteinte durant la navigation.

7. L'aéronef de l'une quelconque des revendications 1-6, où les moyens de propulsion consistent en une turbine à gaz, **caractérisée en qu'**elle comprend des moyens pour éjecter les gaz en bout de pale (10) du rotor (2) et une tuyère de propulsion vers laquelle les gaz de cette turbine se dirigent dès que la vitesse de transition est atteinte durant la navigation.
